# EUROPEAN PATENT SPECIFICATION

(11) **EP 3 165 948 B1**
(45) Date of publication and mention of the grant of the patent: **05.10.2022**
(21) Application number: 16197245.0
(22) Date of filing: 04.11.2016
(51) Int. Cl.: G02B 5/04, G02F 1/1335, F21V 8/00

(54) **BACKLIGHTING DEVICE**
RÜCKBELEUCHTUNGSVORRICHTUNG
ENSEMBLE DE RÉTROÉCLAIRAGE

(30) Priority: 05.11.2015 RU 2015147647; 13.01.2016 KR 20160004137
(43) Date of publication of application: 10.05.2017
(73) Proprietor: Samsung Electronics Co., Ltd., Gyeonggi-do 16677 (KR)
(72) Inventor: MOROZOV, Alexander Viktorovich, 142155 Lvovsky Town (RU); YANUSIK, Igor Vitalievich, 142100 Podolsk (RU); LEE, Jin Ho, 16678 Gyeonggi-do (KR); CHOI, Yoon Sun, 16678 Gyeonggi-do (KR)
(74) Representative: Elkington and Fife LLP

(56) References cited:
- WO-A1-2014/084079
- US-A- 5 897 184
- US-A- 5 926 601
- US-A1- 2004 218 400
- US-A1- 2005 122 745
- US-A1- 2009 091 949
- US-A1- 2012 032 997
- US-A1- 2012 051 705
- US-A1- 2013 083 260

## Description

### FIELD OF THE INVENTION

The invention defines a backlighting device as set forth in claim 1.

### BACKGROUND OF THE INVENTION

Three-dimensional (3D) display devices are used in various fields such as, for example, medical imaging, games, advertisements, education, and military affairs. In addition, currently designed 3D display devices may enable simple switching between 3D and two-dimensional (2D) display modes. Further, numerous studies have been conducted to display 3D images using holographic and stereoscopic techniques.

The stereoscopic technique may be classified into two types: one is a glasses type that requires glasses to provide separate images to eyes of a user through polarized light and a shutter, and the other is a glassless type that does not require glasses. A glassless-type display is also referred to as an autostereoscopic display, and may embody a stereoscopic effect by directly separating images to form field of views.

A glassless-type display device may use parallax barriers to generate a 3D image using a stereo image. The parallax barriers may include vertical slits or slits disposed to be inclined, and provide 3D images separately to a left eye and a right eye of the user through such slits to obtain a stereoscopic effect.

US 2005/122745 A1 (SUGIURA TAKURO [JP]) 9 June 2005 describes an illuminating device having a plurality of prism portions provided on both surfaces of a light guiding plate. The prism portions may be arranged in stripe shapes at predetermined pitches.

US 2012/0032997 A1 discloses a backlight comprising the features recited in the preamble of claim 1.

### SUMMARY OF THE INVENTION

The invention is set forth in the appended claims.

### BRIEF DESCRIPTION OF THE DRAWINGS

These and/or other aspects will become apparent and more readily appreciated from the following description of example embodiments, taken in conjunction with the accompanying drawings of which:
FIG. 1 is a perspective view of a backlighting device switchable between a three-dimensional (3D) display mode and a two-dimensional (2D) display mode according to at least one example embodiment;
FIGS. 2A and 2B are a top view and a bottom view, respectively, of a light guide plate including a prismatic pattern and a linear pattern according to at least one example embodiment;
FIGS. 3A through 3D are perspective views of examples of a prismatic pattern arranged in various forms according to at least one example embodiment;
FIGS. 4A and 4B are diagrams illustrating a single prism in a prismatic pattern according to at least one example embodiment;
FIG. 5 is a cross-sectional view of a single linear groove or protrusion in a linear pattern disposed on a bottom face of a light guide plate according to at least one example embodiment;
FIG. 6 is a cross-sectional view of a backlighting device based on a single light guide plate operating in a 3D display mode according to at least one example embodiment;
FIG. 7 is a perspective view of a first lighting used in a 3D display mode according to at least one example embodiment;
FIGS. 8A and 8B are cross-sectional views of a lighting used in a 3D display mode according to at least one example embodiment;
FIG. 8C is a diagram illustrating a single collimator in a collimating array that is a portion of a lighting according to at least one example embodiment;
FIG. 9 is a cross-sectional view of a backlighting device based on a single light guide plate operating in a 2D display mode according to at least one example embodiment;
FIG. 10 illustrates a display device including a display panel, a backlighting device and a controller according to at least one example embodiment; and
FIG. 11 illustrates a controller according to at least one example embodiment.

### DETAILED DESCRIPTION

Hereinafter, some example embodiments will be described in detail with reference to the accompanying drawings. Regarding the reference numerals assigned to the elements in the drawings, it should be noted that the same elements will be designated by the same reference numerals, wherever possible, even though they are shown in different drawings. Also, in the description of embodiments, detailed description of well-known related structures or functions will be omitted when it is deemed that such description will cause ambiguous interpretation of the present disclosure.

It should be understood, however, that there is no intent to limit this disclosure to the particular example embodiments disclosed.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

In addition, terms such as first, second, A, B, (a), (b), and the like may be used herein to describe components. Each of these terminologies is not used to define an essence, order or sequence of a corresponding component but used merely to distinguish the corresponding component from other component(s). It should be noted that if it is described in the specification that one component is "connected," "coupled," or "joined" to another component, a third component may be "connected," "coupled," and "joined" between the first and second components, although the first component may be directly connected, coupled or joined to the second component.

Unless otherwise defined, all terms including technical and scientific terms used herein have the same meaning as commonly understood by one of ordinary skill in the art to which these example embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In addition, the directional terminology such as "top," "bottom," "front," "back," and "side" is used herein with reference to orientations or directions indicated in the drawings. Components may be disposed in different orientations or directions, and the directional terminology used herein is not intended to limit a scope of example embodiments.

Example embodiments may be described with reference to acts and symbolic representations of operations (e.g., in the form of flow charts, flow diagrams, data flow diagrams, structure diagrams, block diagrams, etc.) that may be implemented in conjunction with units and/or devices discussed in more detail below. Although discussed in a particularly manner, a function or operation specified in a specific block may be performed differently from the flow specified in a flowchart, flow diagram, etc. For example, functions or operations illustrated as being performed serially in two consecutive blocks may actually be performed simultaneously, or in some cases be performed in reverse order.

Units and/or devices according to one or more example embodiments may be implemented using hardware, software, and/or a combination thereof. For example, hardware devices may be implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, or any other device capable of responding to and executing instructions in a defined manner.

For example, when a hardware device is a computer processing device (e.g., a processor, Central Processing Unit (CPU), a controller, an arithmetic logic unit (ALU), a digital signal processor, a microcomputer, a microprocessor, etc.), the computer processing device may be configured to carry out program code by performing arithmetical, logical, and input/output operations, according to the program code. Once the program code is loaded into a computer processing device, the computer processing device may be programmed to perform the program code, thereby transforming the computer processing device into a special purpose computer processing device. In a more specific example, when the program code is loaded into a processor, the processor becomes programmed to perform the program code and operations corresponding thereto, thereby transforming the processor into a special purpose processor.

According to one or more example embodiments, computer processing devices may be described as including various functional units that perform various operations and/or functions to increase the clarity of the description. However, computer processing devices are not intended to be limited to these functional units. For example, in one or more example embodiments, the various operations and/or functions of the functional units may be performed by other ones of the functional units. Further, the computer processing devices may perform the operations and/or functions of the various functional units without sub-dividing the operations and/or functions of the computer processing units into these various functional units.

Units and/or devices according to one or more example embodiments may also include one or more storage devices. The one or more storage devices may be tangible or non-transitory computer-readable storage media, such as random access memory (RAM), read only memory (ROM), a permanent mass storage device (such as a disk drive), solid state (e.g., NAND flash) device, and/or any other like data storage mechanism capable of storing and recording data. The one or more storage devices may be configured to store computer programs, program code, instructions, or some combination thereof, for one or more operating systems and/or for implementing the example embodiments described herein. The computer programs, program code, instructions, or some combination thereof, may also be loaded from a separate computer readable storage medium into the one or more storage devices and/or one or more computer processing devices using a drive mechanism. Such separate computer readable storage medium may include a Universal Serial Bus (USB) flash drive, a memory stick, a Blu-Ray^{™}/DVD/CD-ROM drive, a memory card, and/or other like computer readable storage media. The computer programs, program code, instructions, or some combination thereof, may be loaded into the one or more storage devices and/or the one or more computer processing devices from a remote data storage device via a network interface, rather than via a local computer readable storage medium. Additionally, the computer programs, program code, instructions, or some combination thereof, may be loaded into the one or more storage devices and/or the one or more processors from a remote computing system that is configured to transfer and/or distribute the computer programs, program code, instructions, or some combination thereof, over a network. The remote computing system may transfer and/or distribute the computer programs, program code, instructions, or some combination thereof, via a wired interface, an air interface, and/or any other like medium.

The one or more hardware devices, the one or more storage devices, and/or the computer programs, program code, instructions, or some combination thereof, may be specially designed and constructed for the purposes of the example embodiments, or they may be known devices that are altered and/or modified for the purposes of example embodiments.

A hardware device, such as a computer processing device, may run an operating system (OS) and one or more software applications that run on the OS. The computer processing device also may access, store, manipulate, process, and create data in response to execution of the software. For simplicity, one or more example embodiments may be exemplified as one computer processing device; however, one skilled in the art will appreciate that a hardware device may include multiple processing elements and multiple types of processing elements. For example, a hardware device may include multiple processors or a processor and a controller. In addition, other processing configurations are possible, such as parallel processors.

Example embodiments to be described hereinafter relate to a light guide plate and/or a backlighting device including the light guide plate that provide a function of switching between a three-dimensional (3D) display mode and a two-dimensional (2D) display mode. A display device (not shown) may include the backlighting device with illumination for the 3D display mode and the 2D display mode. The 3D display mode refers to a mode to display a 3D image, and the 2D display mode refers to a mode to display a 2D image.

Hereinafter, example embodiments are described in detail with reference to the accompanying drawings. Like reference numerals in the drawings denote like elements, and a known function or configuration and a redundant description of the same components will be omitted herein.

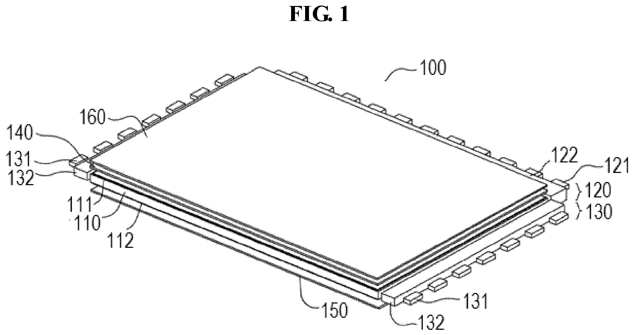

FIG. 1 is a perspective view of a backlighting device that is switchable between a 3D display mode and a 2D display mode according to at least one example embodiment.

Referring to FIG. 1, a backlighting device 100 includes a substrate 110, a first lighting 120, a second lighting 130, a light redirecting film 140, and a reflecting film 150. It is apparent to those skilled in the art that a scope of example embodiments is not limited to the number of such components illustrated in FIG. 1, and thus the number of components of the backlighting device 100 may vary depending on example embodiments, provided at least the features recited in claim 1 are present. For example, the backlighting device 100 may additionally include at least two first lightings 120, second lightings 130, light redirecting films 140, and reflecting films 150, depending on example embodiments. The backlighting device 100 may use a single substrate 110 to reduce a thickness of the backlighting device 100.

As illustrated in FIG. 1, the first lighting 120 is used in the 3D display mode, and may include at least one light source 121 and at least one light transformation unit 122. The second lighting 130 is used in the 2D display mode, and may include at least one light source 131 and at least one light transformation unit 132. The first lighting 120 may emit a first light beam towards one of a front face and a back face of the substrate 110, and the second lighting 130 may emit a second light beam towards at least one of a plurality of side faces of the substrate 110.

Since the first lighting 120 and the second lighting 130 are used for the 3D display mode and the 2D display mode, respectively, the first light beam emitted from the first lighting 120 and the second light beam emitted from the second lighting 130 may have different angular distributions. As described hereinafter, a prismatic pattern 111 is disposed on a top face of the substrate 110, and a linear pattern 112 is disposed on a bottom face of the substrate 110. The prismatic pattern 111 may be provided to extract the first light beam in the 3D display mode, and the linear pattern 112 may be provided to extract the second light beam in the 2D display mode. A term "light guide plate" used herein indicates a combination of the substrate 110 with the prismatic pattern 111 and the linear pattern 112. The light redirecting film 140 is disposed above the substrate 110, and the reflecting film 150 is disposed under the substrate 110.

The light source 121 may be embodied as at least one light emitting diode (LED), laser diode, lamp, or a combination thereof. According to at least one example embodiment, the light source 121 may be embodied as at least one LED configured to emit non-collimated unpolarized light, or at least one laser diode configured to emit polarized high-collimated light. The light transformation unit 122 may perform a function of, for example, angular transformation, homogenization, and collimation, on light emitted from the light source 121, and allow light transformed to be the first light beam to be incident to the substrate 110.

The light source 131 may also be embodied as at least one LED or lamp configured to emit non-collimated unpolarized light, or as at least one laser diode configured to emit polarized high-collimated light, or as a combination thereof. The light transformation unit 132 may perform a function of, for example, angular transformation, homogenization, and collimation, on light emitted from the light source 131, and allow light transformed to be the second light beam to be incident to the substrate 110.

According to at least one example embodiment, the backlighting device 100 may further include a Fresnel lens film 160. The Fresnel lens film 160 may be disposed above the light redirecting film 140. The Fresnel lens film 160 may have a radial structure or a cylindrical structure.

The light redirecting film 140 may redirect, to a top surface of the Fresnel lens film 160 or a viewer, the first light beam emitted from first lighting 120 and coupled out of the substrate 110 by the prismatic pattern 111. Here, "light or light beam coupled out of somewhere" or "couple light or light beam out of somewhere" may refer to "light or light beam escaped from somewhere or passing through somewhere" or "allow light or light beam to escape from somewhere or pass through somewhere." In the 3D display mode, the Fresnel lens film 160 may be used to concentrate the first light beam from the light redirecting film 140 on an area in which the viewer is located. In the 2D display mode, the Fresnel lens film 160 may be used to concentrate the second light beam from the light redirecting film 160 on the area in which the viewer is located.

The reflecting film 150 may reflect the second light beam coupled out of the substrate 110 by the linear pattern 112, and change an angular distribution of the second light beam to allow the second light beam to direct towards the viewer after passing through the substrate 110 and the light redirecting film 140 (and the Fresnel lens film 160, if necessary).

Switching between the 3D display mode and the 2D display mode may be realized by switching between the first lighting 120 and the second lighting 130. In the 3D display mode, the light source 121 of the first lighting 120 may be powered on, while the light source 131 of the second lighting 130 may be powered off. In the 2D display mode, the light source 121 of the first lighting 120 may be powered off, while the light source 131 of the second lighting 130 may be powered on.

The first light beam and the second light beam may be propagated inside the substrate 110 of the backlighting device 100 based on an effect of total internal reflection.

As described above, the light guide plate may include the substrate 110, the prismatic pattern 111 disposed on the top face of the substrate 110, and the linear pattern 112 disposed on the bottom face of the substrate 110. The substrate 110, the prismatic pattern 111, and the linear pattern 112 may be formed of polymethyl methacrylate (PMMA), glass, other optically transparent material, or a combination thereof. According to at least one example embodiment, the substrate 110, the prismatic pattern 111, and the linear pattern 112 may be formed as a single structure.

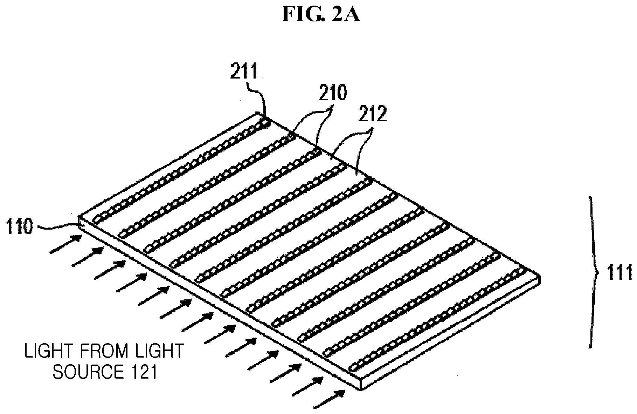

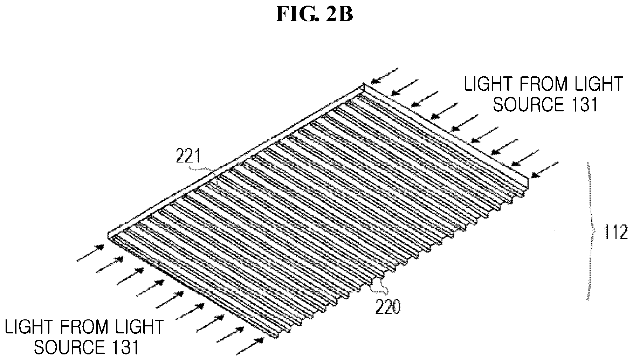

The light guide plate will be described hereinafter with reference to FIGS. 2A and 2B.

FIGS. 2A is a top view of a light guide plate including a prismatic pattern according to at least one example embodiment;

Referring to FIG. 2A, in the 3D display mode, the prismatic pattern 111 may partially couple the first light beam incident to the substrate 110 out of the substrate 110, and direct the first light beam towards the light redirecting film 140. The prismatic pattern 111 may include a plurality of prism rows 210 spaced therebetween. Each of the prism rows 210 may include a plurality of prisms 211 arranged back to back with each other.

The first light beam emitted from the light source 121 of the first lighting 120 may be incident to the front face of the substrate 110. The top face and the bottom face of the substrate 110 may be optically polished. The prism rows 210 may be arranged separately from each other on the top face of the substrate 110 by non-patterned zones 212. When the first light beam emitted from the light source 121 and incident to the substrate 110 collides with the non-patterned zones 212, the first light beam may be continuously propagated inside the substrate 110 by the effect of total internal reflection. When the first light beam emitted from the light source 121 and incident to the substrate 110 collides with the prism rows 210, the first light beam may be partially coupled out of the substrate 110 because the effect of total internal reflection is lost.

When the prism rows 210 function as linear slits, similarly to slits of parallax-barriers, the first light beam coupled out of the substrate 110 through the prism rows 210 may form illumination having a stereoscopic display effect. Since the first light beam colliding with the non-patterned zones 212 stays inside the substrate 110 due to the effect of total internal reflection, the non-patterned zones 212 may function as barriers of the parallax-barriers. The prismatic pattern 111 may be provided on the top face of the substrate 110 through, for example, etching, printing, gluing, molding, cutting, or a combination thereof.

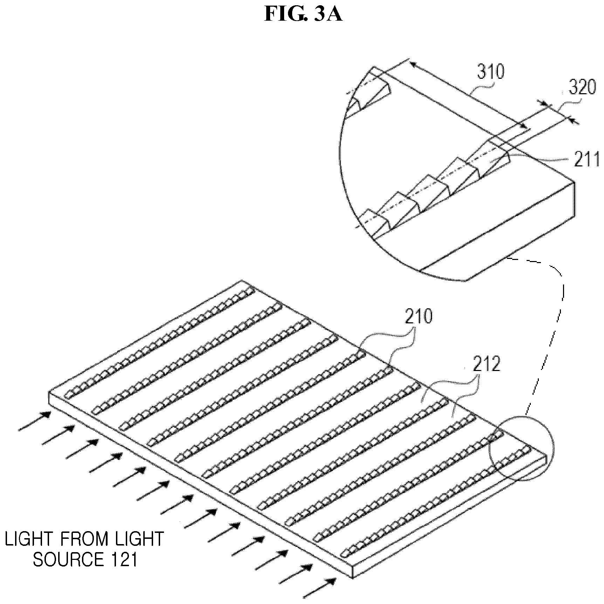

FIGS. 3A through 3D are perspective views of examples of the prismatic pattern 111 arranged in various forms.

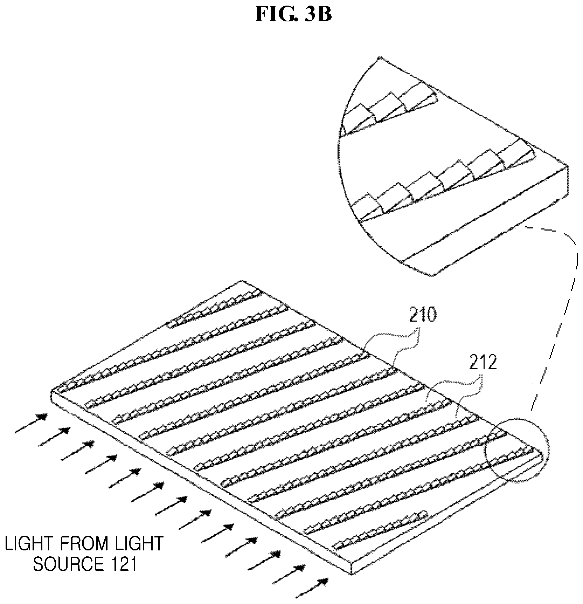

As illustrated in FIG. 3A, the prism rows 210 in the prismatic pattern 111 may be arranged in parallel with a propagating direction of the first light beam emitted from the light source 121. Alternatively, as illustrated in FIGS. 3B through 3D, the prism rows 210 may be arranged by being rotated by an angle relative to the propagating direction of the first light beam.

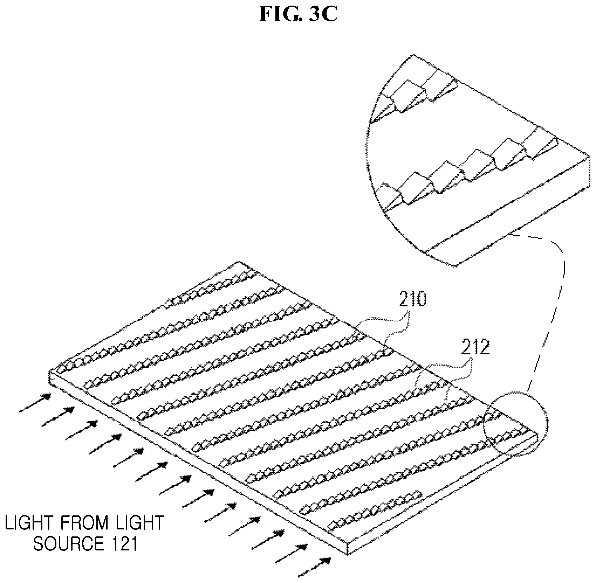

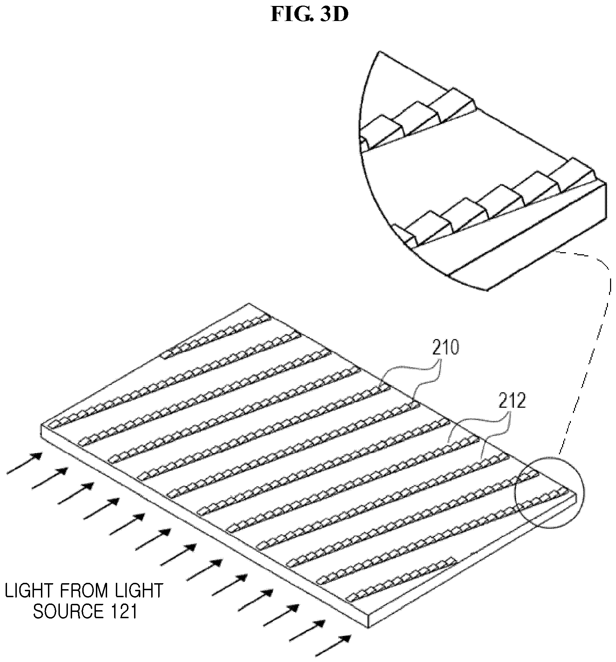

Each of the prisms 211 included in the prism rows 210 of the prismatic pattern 111 may be oriented to the same direction as the propagating direction of the first light beam as illustrated in FIGS. 3A and 3C, or may be rotated by an angle in a general row direction in the prismatic pattern 111 as illustrated in FIGS. 3B and 3D. The prisms 211 included in the prism rows 210 may be linearly arranged back to back with each other as illustrated in FIGS. 3A, 3B and 3D, or arranged to be in a form of zigzag lines as illustrated in FIG. 3C.

The prismatic pattern 111 may be defined by principal parameters, such as a distance 310 or a spacing between the prism rows 210 and a width 320 of each of the prism rows 210. The distance 310 may be used to determine an image generation algorithm, and a quality of a stereoscopic image to be obtained in a process of image generation and illumination, for example, a resolution and the number of views of the image. In general, the distance 310 may be constant, but variable depending on an algorithm requirement. The width 320 may be determined based on a width between linear light sources configure to illuminate a panel image generated by the image generation algorithm. In general, the width 320 may be constant, but variable depending on an algorithm requirement or a necessity for improving efficiency and uniformity of light extraction from the substrate 110. For example, when the width 320 is not constant, the width 320 may increase towards the back face of the substrate 110 starting from the front face of the substrate 110 based on the arranged orientations illustrated in FIGS. 3A through 3D.

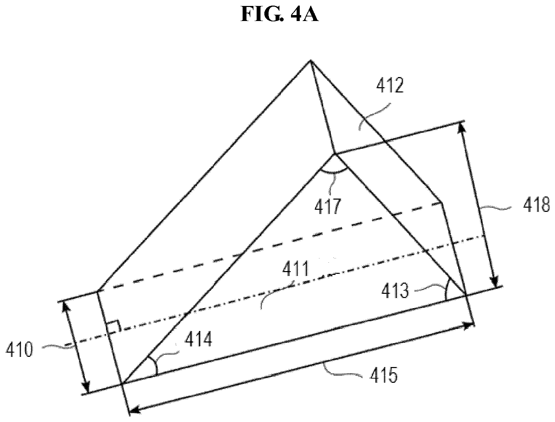

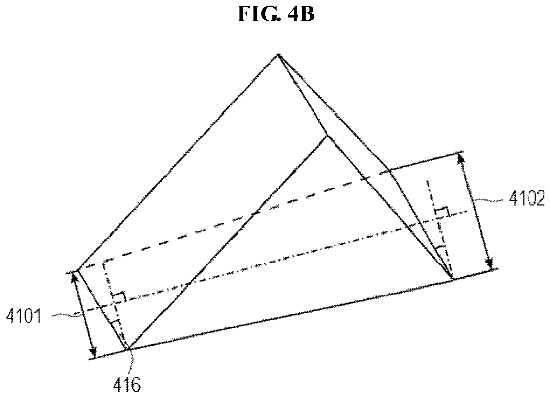

FIGS. 4A and 4B are diagrams illustrating a single prism included in the prismatic pattern 111.

Referring to FIGS. 4A and 4B, the prisms 211 may be arranged such that the width 320 of each of the prism rows 210 may change continuously or discretely for each prism 211 depending on an applied algorithm requirement, a prismatic row distribution, and production technology. The width 320 may be defined by a width 410 of each prism 211 arranged in the prism rows 210. Principal parameters of each prism 211 in the prismatic pattern 111 may be defined to allow the first light beam to be coupled out of the substrate 110 with high efficiency and uniformity but without a degradation of inherent light parameters such as an angular distribution.

The width 410 may be constant for each prism 211 as illustrated in FIG. 4A, or variable with a start value 4101 and an end value 4102, which are different from each other as illustrated in FIG. 4B, in accordance with an applied condition. The width 410 may be used to define an amount of the first light beam passing through a bottom surface 411 of each prism and an amount of the first light beam to be coupled out of the substrate 110 through a surface 412 of the prism because the effect of total internal reflection is lost. To counteract the effect of total internal reflection, the surface 412 may be oriented at an angle greater than an angle of total internal reflection between the first light beam propagated inside the substrate 110 and the surface 412. An angular position of the surface 412 may be defined by a first base angle 413 that is selected based on parameters of the first lighting 120, and by propagating parameters of the first light beam in the substrate 110. In general, the first base angle 413 may also be defined by an angular structure of a prismatic surface of the light redirecting film 140 used to accurately redirect the first light beam coupled out of the substrate 110 towards the area in which the viewer is located.

A second base angle 414 may be defined as a value to obtain a uniform vertical angular distribution of the first light beam coupled out of the substrate 110 after passing through the surface 412. A prism length 415 may be determined as a value to provide high-quality uniform lines for the first light beam coupled out of the substrate 110. When the prism rows 210 in the prismatic pattern 111 are arranged in a zigzag form, the prism length 415 may be additionally defined by a structure of the light redirecting film 140, a construction of a display panel, and algorithm requirements.

As described above with reference to FIGS. 3B and 3D, each prism 211 may be embodied as a prism in a modified form in which guides are not perpendicular to lateral prism sides and, instead, are turned at an angle 416 to compensate for a potential light deviation. Other parameters such as, for example, a top angle 417 and a prism height 418, may be dimensions defined based on the first base angle 413, the second base angle 414, and the prism length 415.

The parameters of each prism 211 may be associated with characteristics of the first light beam emitted from the light source 121 and being propagated inside the substrate 110.

FIG. 2B is a bottom view of a light guide plate including a linear pattern according to at least one example embodiment.

Referring to FIG. 2B, the linear pattern 112 may be disposed on the bottom face of the substrate 110, and include an array of linear grooves and/or protrusions 220. The linear pattern 112 may be formed on the bottom face of the substrate 110 through, for example, etching, printing, or a combination thereof.

In the 2D display mode, the second light beam may be emitted from the second light source 131 of the second lighting 130 and to be incident to at least one side face of the substrate 110. When the second light beam collides with the linear grooves or protrusions 220 formed on the bottom face of the substrate 110, the linear pattern 112 may partially couple the second light beam out of the substrate 110. The The second light beam partially coupled out of the substrate 110 through the linear pattern 112 may direct towards the reflecting film 150. Similar to the first light beam used in the 3D display mode, when the second light beam collides with non-patterned zones 221 between the linear grooves or protrusions 220, the second light beam may be propagated further inside the substrate 110 because the effect of total internal reflection is not lost.

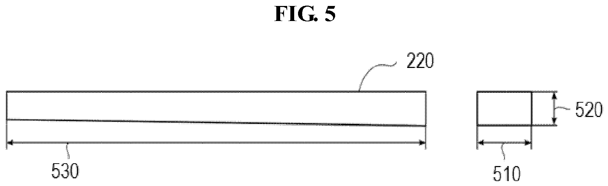

FIG. 5 is a cross-sectional view of a single linear groove or protrusion in the linear pattern 112.

Referring to FIG. 5, the linear pattern 112 may have parameters such as, for example, a distance or a spacing between the linear grooves or protrusions 220, and a width 510, a height 520, and a length 530 of each of the linear grooves or protrusions 220. The distance between the linear grooves or protrusions 220 may be constant or variable. For example, the distance between the linear grooves or protrusions 220 may be determined as a value to provide uniform illumination. In addition, the width 510 and the height 520 of each of the grooves or protrusions 220 in the linear pattern 112 may also be constant or variable. When the width 510 and the height 520 are variable, the width 510 and height 520 may be determined based on the length 530 to allow the second light beam to be uniformly extracted from all dimensions of the substrate 110. In addition, the distance between the linear grooves or protrusions 220, the width 510, and the height 520 may change linearly, disorderedly, or in other proper manners. Depending on example embodiments, each of the linear grooves or protrusions 220 of the linear pattern 112 may be arranged perpendicularly to a propagating direction of the second light beam or arranged to have an angle relative to the propagating direction of the second light beam.

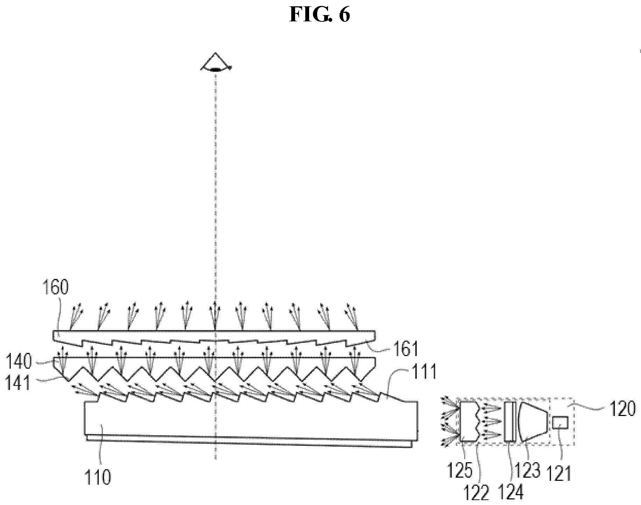

FIG. 6 is a cross-sectional view of a backlighting device based on a single light guide plate operating in a 3D display mode according to at least one example embodiment, which illustrates a functional design of illumination in the 3D display mode.

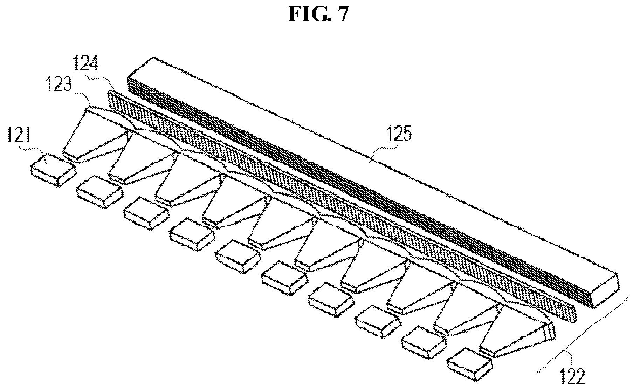

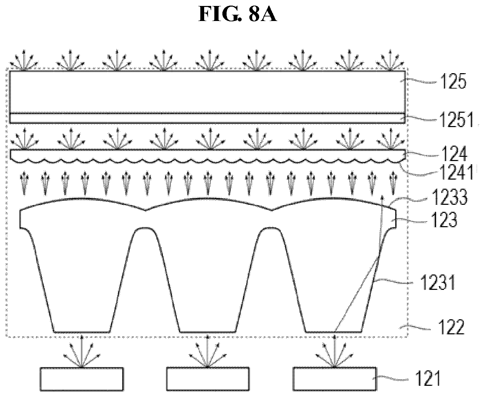

Referring to FIG. 6, the first lighting 120 may be located close to the substrate 110 to allow the first light beam emitted from the light source 121 to be incident to the substrate 110 after passing the light transformation unit 122. In a case of the light source 121 being embodied as at least one LED, the light transformation unit 122 may include a collimating array 123 configured to collimate light of the LED using the effect of total internal reflection, a homogenizing film 124 configured to homogenize light collimated by the collimating array 123, and a redirecting cube 125 configured to prove additional light interfusion as a Bezel zone component and light redirection to increase efficiency and uniformity in extracting light from the substrate 110. The different views of such type of the light transformation unit 122 are illustrated in FIGS. 7, and 8A through 8C. As described above, the light emitted from the first lighting 120 may be incident to the substrate 110 as the first light beam.

FIG. 7 is a perspective view of a first lighting used in a 3D display mode according to at least one example embodiment;

Referring to FIGS. 6 and 7, the collimating array 123 may be a row of united or separated collimators for each of the light source 121 included in an array of the light source 121, or include other components having a different structure but performing a function of transforming point-distributed non-collimated light to a uniform spatial distribution of collimated light.

The homogenizing film 124 may transform an angular distribution of input light to an angular distribution for injection into the substrate 110 and illumination. The homogenizing film 124 may be embodied as a lenticular film with a micro-cylindrical pattern, a micro-spherical patterned film having concave and convex lens arrays, a light shaping diffuser (LSD) configured to provide light diffusion for at least one of a vertical axis and a horizontal axis, or as other films having a different structure but a same function of manipulating light by changing a direction of light energy.

The redirecting cube 125 may split light incident to the redirecting cube 125 into several interdependent directions to increase efficiency and uniformity in extracting light from the substrate 110. The redirecting cube 125 may be embodied as a cube having a symmetrical or asymmetrical prismatic structure, or as other cubes having a different structure but a same function of manipulating light by splitting light into several interdependent directions. The redirecting cube 125 may have a length increased along a propagating direction of light to operate similarly to a bezel zone component.

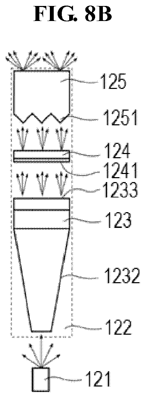

FIGS. 8A and 8B are a top view and a side view of the light transformation unit 122, respectively.

Referring to FIGS. 8A and 8B, non-collimated light emitted from the light source 121 arranged regularly may be refracted in a front face of each collimator included in the collimating array 123 and injected into the colllimator. The light incident to each collimator may be collimated by the effect of total internal reflection on a lateral face 1231 for horizontal collimation and on a bottom face 1232 for vertical collimation. A cylindrical face 1233 may provide additionally required collimation in a horizontal direction that compensates for a length of the collimating array 123.

The light collimated by the collimating array 123 may pass through the homogenizing film 124 embodied as a lenticular film having a vertically-oriented micro-cylindrical surface 1241. Parameters of the homogenizing film 124 may be determined based on key angular characteristics of input light and required output light.

A distribution of light from the homogenizing film 124 may be adjusted by the redirecting cube 125 having a symmetrical micro-prismatic surface 1251. The micro-prismatic surface 1251 may include elongated micro-prisms arranged regularly in a vertical direction. The light may be refracted on the micro-prismatic surface 1251 with an additional angular displacement, and pass through the redirecting cube 125. Vertical and horizontal dimensions of all components in the light transformation unit 122 may be defined based on a dimension of the light source 121 and an area of the front face of the substrate 110 that is illuminated by the light source 121. All the components in the light transformation unit 122 may be arranged back to back with each other without a gap or with a small gap to reduce an overall thickness of the first lighting 120.

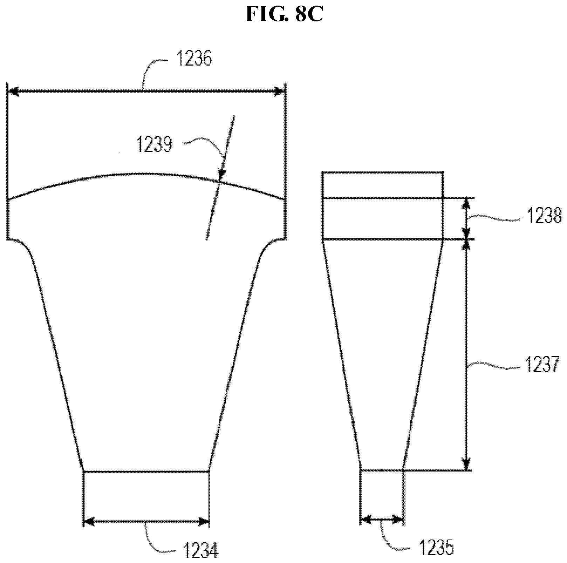

FIG. 8C is a diagram illustrating a single collimator included in the collimating array 123.

Referring to FIG. 8C, a first horizontal width 1234 of a collimator may be determined based on a horizontal dimension of a single lightning area to be illuminated by the light source 121. Similarly, a vertical height 1235 of the collimator may be determined based on a vertical dimension of the lighting area to be illuminated by the light source 121. A second horizontal width 1236 of the collimator may be defined based on the number of light sources included in an array of the light source 121 and a distance between the light sources in the array of the light source 121 that is calculated based on a dimension of the front face of the substrate 110 to be illuminated by the light source 121. A first length 1237 of the collimator may be defined by a method to provide a wide angular distribution in a process of sufficiently collimating non-collimated light. In general, the first length 1237 may be determined based on a condition to provide a uniform spatial and angular distribution of collimated light. A second length 1238 of the collimator may be defined based on general requirements and manufacturing possibilities for a collimation length. A radius 1239 of a cylindrical face 1233 may have a value suitable to obtain a component having a focal length sufficient for additional collimation. All such parameters of each collimator included in the collimating array 123 may be variable, and the designs illustrated in FIGS. 8A through 8C are provided as an illustrative example only, and thus values of the parameters may be changed to achieve the same characteristics of output light.

An appropriate and suitable embodiment or implementation of the light transformation unit 122 may enable effective and uniform light extraction for high-quality illumination in the 3D display mode, and enable an angular and spatial light distribution required for light to be further injected into the substrate 110.

Returning back to FIG. 6, the first light beam coupled out of the substrate 110 through the prismatic pattern 111 may reach the light redirecting film 140 disposed above the substrate 110. The light redirecting film 140 may redirect the first light beam. The light redirecting film 140 may be embodied as a film of which a prismatic structure 141 is arranged on a bottom face of the light redirecting film 140. The prismatic structure 141 may redirect the first light beam based on the effect of total internal reflection. The first light beam coupled out of the substrate 110 through the prismatic pattern 111 may reach at least one side face of each prism in the prismatic structure 141. After the first light beam is refracted on the at least one said face of each prism in the prismatic structure 141, the first light beam may collide with an opposite side. The first light beam may then pass through a remaining portion of the light redirecting film 140, and normally reach a top face of the light redirecting film 140. The light redirecting film 140 may also be embodied as an optical film having a different structure but the same functionality.

After passing through the light redirecting film 140, the first light beam may be propagated to a Fresnel lens structure 161 arranged on a bottom face of the Fresnel lens film 160. In the 3D display mode, the Fresnel lens film 160 may be used to concentrate the first light beam incident from the light redirecting film 140 on the area in which the viewer is located. In the 2D display mode, the Fresnel lens film 160 may be used to concentrate the second light beam incident from the light redirecting film 140 on the area in which the viewer is located. Each Fresnel lens may be defined by parameters such as a radius or a curvature, and the parameters may be determined as values to focus a direction of the first light beam or a direction of the second light beam on the area in which the viewer is located with a predetermined distance from a display.

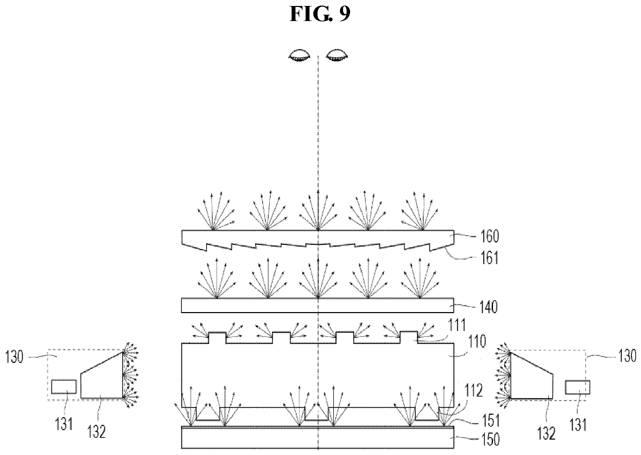

FIG. 9 is a cross-sectional view of a backlighting device based on a single light guide plate operating in a 2D display mode, which illustrates a functional design of illumination in the 2D display mode.

As illustrated in FIG. 9, the second lighting 130 may be disposed on side faces of the substrate 110 to allow light emitted from the light source 131 to be incident to the substrate 110. Depending on example embodiments, the second lighting 130 may be a single lighting or a plurality of lightings.

As described above, the second lighting 130 may include the light source 131 and the light transformation unit 132. The light transformation unit 132 may have a length increased along a light propagating direction to operate as a bezel zone component. The light emitted from the light source 131 may pass through the light transformation unit 132, and light of which an angle is transformed by the light transformation unit 132 may be incident to the substrate 110 through the side faces of the substrate 110 as the second light beam. The second light beam may be propagated inside the substrate 110, similarly to a waveguide.

The second light beam coupled out of the substrate 110 through the linear pattern 112 may be oriented far from a normal direction with a desired (or, alternatively, a precalculated) angular divergence, and reach the reflecting film 150. The reflecting film 150 may reflect the second light beam, and change an angular distribution of the second light beam. The second light beam may pass through the light redirecting film 140, and normally direct towards a top surface of the Fresnel lens film 160. The reflecting film 150 may be embodied as a reflecting micro-spherical concave or convex lens patterned film, a micro-pyramidal lens patterned film, and a reflecting diffuser having a lambertian angular distribution, or as a reflecting film having a different structure but the same functionality or as an assembly of films having the same functionality. The second light beam incident onto a surface 151 of the reflecting film 150 may be reflected upwards with an angular light distribution that is changed to pass through the light redirecting film 140.

Thus, a uniform spatial and sufficient angular light distribution for further liquid crystal display (LCD) illumination along with a wide field of view may be provided in the 2D display mode. Characteristics described above may be obtained by the linear pattern 112 formed on the bottom face of the substrate 110.

According to at least one example embodiment, the backlighting device 100 may be configured to be switchable between the 3D display mode and the 2D display mode. When the 3D display mode is selected, the first lighting 120 may be powered on and the second lighting 130 may be powered off, and the first light beam coupled out of the substrate 110 through the prismatic pattern 111 may be redirected towards the viewer by the light redirecting film 140. Conversely, when the 2D display mode is selected, the first lighting 120 may be powered off and the second lighting 130 may be powered on, and the second light beam coupled out of the substrate 110 through the linear pattern 112 may be reflected by the reflecting film 150 and an angular distribution of the second light beam may be changed, and may be redirected towards the viewer after passing through the substrate 110 and the light redirecting film 140.

According to at least one example embodiment, using a single light guide plate for both a 3D display mode and a 2D display mode, a thickness of a backlighting device may be reduced. In addition, using at least one light source for each of the 3D display mode and the 2D display mode, switching between the 3D display mode and the 2D display mode may be readily performed.

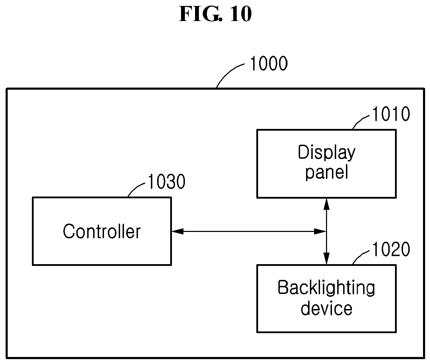

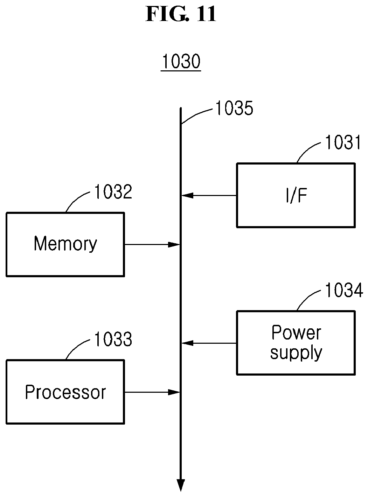

FIG. 10 illustrates a display device including a display panel, a backlighting device and a controller according to example embodiments and FIG. 11 illustrates a controller according to example embodiments.

Referring to FIGS. 10 and 11, a display device 1000 may include a display panel 1010, a backlighting device 1020 and a controller 1030.

The backlighting device 1020 may be embodied as the backlighting device 100 of FIG. 1 and may be disposed at a back of the display panel 1010 and provide light for outputting image data to the display panel 1010. The display panel 1010 may be a liquid crystal display (LCD) panel having subpixels arranged based on a matrix form and may function based on the light provided from the backlighting device 1020.

The controller 1030 may control the display panel 1010 and the backlighting device 1020. For example, the controller 1030 may instruct the backlighting device 1020 to enter a first mode or a second mode based on, for example a type of the image data. In some example embodiments, the first mode may be a three-dimensional (3D) display mode and the second mode may be a two-dimensional (2D) display mode.

As illustrated in FIG. 11, the controller 1030 may include an interface (I/F) 1031, a memory 1032, a processor 1033, a power supply 1034 and a data bus 1035.

The interface (I/F) 1031, the memory 1032, and the processor 1033, may be configured to send data to and/or receive data from one another using the data bus 1035. Further, the interface (I/F) 1031, the memory 1032, the processor 1033 may receive an operating power from the power supply 1034.

The interface (I/F) 1031 may include transmitters and/or receivers. The transmitters may include hardware and any necessary software for transmitting signals including, for example, data signals and/or control signals. The receivers may include hardware and any necessary software for receiving signals including, for example, data signals and/or control signals.

The memory 1032 may be a non-volatile memory, a volatile memory, a hard disk, an optical disk, and a combination of two or more of the above-mentioned devices. The memory may be a non-transitory computer readable medium. The non-transitory computer-readable media may also be a distributed network, so that the program instructions are stored and executed in a distributed fashion. The non-volatile memory may be a Read Only Memory (ROM), a Programmable Read Only Memory (PROM), an Erasable Programmable Read Only Memory (EPROM), or a flash memory. The volatile memory may be a Random Access Memory (RAM).

The processor 1033 may be implemented by at least one semiconductor chip disposed on a printed circuit board. The processor 1033 may be an arithmetic logic unit, a digital signal processor, a microcomputer, a field programmable array, a programmable logic unit, a microprocessor or any other device capable of responding to and executing instructions in a defined manner.

The processor 1033 may be programed with instructions that configure the processor 1033 into a special purpose computer to control the display panel 1010 and the backlighting device 1020. For example, the processor 1033 may be configured to determine a type of the image data received, via the interface (I/F) 1031, the type may be one of three-dimensional (3D) image data or two-dimensional (2D) image data, and may instruct, via the interface (I/F) 1031, the backlighting device 1020 to enter the three-dimensional (3D) mode or the two-dimensional (2D) mode based on the determined type of the image data. For example, the processor 1033 may instruct the backlighting device 100 to enable the first lighting device 120 and disable the second lighting device 130 to enter the three-dimensional (3D) mode, and may instruct the backlighting device 100 to disable the first lighting device 120 and enable the second lighting device 130 to enter the two-dimensional (2D) mode.

Therefore, the controller 100 may switch the backlighting device 100 between the 3D display mode, in which the first lighting 120 is powered on and the second lighting 130 is powered off such that the first light beam coupled out of the substrate 110 through the prismatic pattern 111 may be redirected towards the viewer by the light redirecting film 140, and the 2D display mode, in which the first lighting 120 is powered off and the second lighting 130 is powered on such that the second light beam coupled out of the substrate 110 through the linear pattern 112 may be reflected by the reflecting film 150 and an angular distribution of the second light beam may be changed and redirected towards the viewer after passing through the substrate 110 and the light redirecting film 140.

## Claims

1. A backlighting device (100) selectively operable in a two-dimensional, 2D, display mode or in a three-dimensional, 3D, display mode, comprising:
a substrate (110) configured to propagate at least one of a first light beam and a second light beam based on an effect of total internal reflection;
a first lighting device (120) configured to emit the first light beam in said 3D display mode;
a second lighting device (130) configured to emit the second light beam in said 2D display mode;
a prismatic pattern (111) configured to couple the first light beam out of the substrate;
a light redirecting film (140) disposed above the first face of the substrate;
a reflecting film (150) disposed under a second face of the substrate; a linear pattern (112) configured to couple the second light beam out of the substrate
**characterized in that**
said prismatic pattern (111) is disposed on a first face of said substrate;
said linear pattern (112) is disposed on a second face of said substrate;
said substrate (110), said prismatic pattern (111), and said linear pattern (112) are comprised in a light guide plate;
said first lighting device (120) is configured to emit said first light beam towards said light guide plate; and **in that**
said second lighting device (130) is configured to emit said second light beam towards said light guide plate.

2. The backlighting device of claim 1, wherein the prismatic pattern comprises:
a plurality of prism rows (210) spaced apart on the first face of the substrate, and preferably wherein the plurality of prism rows are arranged in one of a first prismatic direction and a second prismatic direction, the first prismatic direction being a direction parallel with a propagating direction of the first light beam, and the second prismatic direction being a direction rotated at an angle relative to the propagating direction of the first light beam.

3. The backlighting device of claim 2, wherein the prismatic pattern is configured to externally couple the first light beam out of the substrate when the first light beam collides with one of the prism rows.

4. The backlighting device of claim 2 or 3, wherein each of the plurality of prism rows comprises a plurality of prisms (211) on the first face of the substrate adjacent to each other such that each of the plurality of prism rows has one of a linear and a zigzag form.

5. The backlighting device of any preceding claim, wherein the linear pattern comprises:
a linear array of one of grooves and protrusions on the second face of the substrate, and optionally wherein:
the one of grooves and protrusions are one of regularly arranged on the second face of the substrate and irregularly arranged on the second face of the substrate; or
the one of grooves and protrusions are arranged in one of a first linear direction and a second linear direction, the first linear direction being perpendicular to a propagating direction of the second light beam, and the second linear direction being a direction rotated at angle relative to the propagating direction of the second light beam.

6. The backlighting device of claim 5, wherein the linear pattern is configured to externally couple the second light beam out of the substrate when the second light beam collides with one of the grooves or protrusions.

7. The backlighting device of any preceding claim, wherein the light guide plate is configured to operate in the 3D display mode and the 2D display mode such that the first light beam is incident to one of a front face and a back face of the substrate, when the substrate operates in the 3D display mode, and such that the second light beam is incident to at least one of side faces of the substrate, when the substrate operates in the 2D display mode, and
wherein the first light beam and the second light beam have different angular distributions.

8. The backlighting device of any preceding claim, wherein the substrate (110), the prismatic pattern (111) and the linear pattern (112) are a single structure.

9. The backlighting device of claim 8, wherein
the first lighting device (120) is configured to emit the first light beam towards one of a third face and a fourth face of the light guide plate,
the second lighting device (130) is configured to emit the second light beam towards at least one of the first face and the second face of the light guide plate, and
the first light beam and the second light beam have different angular distributions.

10. The backlighting device of claim 8 or 9, wherein, the backlighting device is configured to,
enable the first lighting device and disable the second lighting device, if the backlighting device is operating in the 3D display mode, and
enable the second lighting device and disable the first lighting device, if the backlighting device is operating in the 2D display mode.

11. The backlighting device of claim 8, 9, or 10, wherein the first lighting device comprises:
a first light source (121) configured to emit first light, if the backlighting device is operating in the 3D display mode; and
a first light transformation device (122) configured to generate the first light beam based on the first light, and direct the first light beam incident to the light guide plate, and optionally wherein the first light transformation device is configured to perform at least one of angular transformation, homogenization, and collimation on the first light, and further optionally wherein the first light transformation device comprises a collimating array (123), a homogenizing film (124), and redirecting cube (125), wherein
the collimating array includes separated or united collimators,
the homogenizing film includes at least one of a micro-cylindrical pattern film, a micro-spherical pattern film, and a light shaping diffuser, and
the redirecting cube includes a cube having one of a symmetrically prismatic structure and an asymmetrically prismatic structure.

12. The backlighting device of any of claims 8 to 11, wherein the second lighting device comprises:
a second light source (131) configured to emit second light, if the backlighting device is operating in the 2D display mode; and
a second light transformation device configured to generate the second light beam by adjusting the second light, and to direct the second light beam to be incident to the light guide plate, and optionally wherein the second light transformation device is configured to perform at least one of angular transformation, homogenization, and collimation on the second light.

13. The backlighting device of any of claims 8 to 12, wherein the reflecting film (150) is configured to reflect the second light beam coupled out of the light guide plate and to change an angular distribution of the second light beam, if the backlighting device is operating in the 2D display mode.
wherein the reflecting film comprises at least one of a micro-spherical convex lens patterned film or a micro-spherical concave lens patterned film, a micro-pyramidal lens patterned film, and a reflecting diffuser having a Lambertian angular distribution.

14. A display device (1000) comprising:
the backlighting device of any of the preceding claims; and
a controller (1030) configured to instruct the backlighting device (100, 1020) to set the display mode as one of the three-dimensional, 3D, display mode and the two-dimensional 2D display mode, and preferably wherein the controller is configured to:
instruct the first lighting device to emit the first light beam towards the light guide plate, if the display mode is the 3D display mode, and
instruct the second lighting device to emit the second light beam towards the light guide plate, if the display mode is the 2D display mode.

## Patentansprüche

1. Eine Hintergrundbeleuchtungsvorrichtung (100), die gezielt in einem zweidimensionalen, 2D-, Anzeigemodus, oder in einem dreidimensionalen, 3D-, Anzeigemodus, betrieben werden kann, umfassend:
ein Substrat (110), das so eingerichtet ist, dass es mindestens einen von einem ersten Lichtstrahl und einem zweiten Lichtstrahl auf der Grundlage des Effekts der inneren Gesamtreflexion ausbreitet;
eine erste Beleuchtungsvorrichtung (120), die so eingerichtet ist, dass sie den ersten Lichtstrahl in dem 3D-Anzeigemodus emittiert;
eine zweite Beleuchtungsvorrichtung (130), die so eingerichtet ist, dass sie den zweiten Lichtstrahl in dem 2D-Anzeigemodus emittiert;
ein prismatisches Muster (111), das so eingerichtet ist, dass es den ersten Lichtstrahl aus dem Substrat herauskoppelt;
eine lichtumlenkende Schicht (140), die über der ersten Fläche des Substrats angeordnet ist;
eine reflektierende Schicht (150), die unter einer zweiten Fläche des Substrats angeordnet ist;
ein lineares Muster (112), das so eingerichtet ist, dass es den zweiten Lichtstrahl aus dem Substrat herauskoppelt;
**dadurch gekennzeichnet, dass**
das prismatische Muster (111) auf einer ersten Fläche des Substrats angeordnet ist;
das lineare Muster (112) auf einer zweiten Fläche des Substrats angeordnet ist;
das Substrat (110), das prismatische Muster (111) und das lineare Muster (112) in einer Lichtleiterplatte enthalten sind;
die erste Beleuchtungsvorrichtung (120) so eingerichtet ist, dass sie den ersten Lichtstrahl in Richtung der Lichtleiterplatte emittiert, und dadurch, dass
die zweite Beleuchtungsvorrichtung (130) so eingerichtet ist, dass sie den zweiten Lichtstrahl in Richtung der Lichtleiterplatte emittiert.

2. Hintergrundbeleuchtungsvorrichtung nach Anspruch 1, wobei das prismatische Muster umfasst:
eine Vielzahl von Prismenreihen (210), die auf der ersten Fläche des Substrats beabstandet sind, und wobei vorzugsweise die Vielzahl von Prismenreihen in einer ersten prismatischen Richtung und in einer zweiten prismatischen Richtung angeordnet sind, wobei die erste prismatische Richtung eine Richtung parallel zu einer Ausbreitungsrichtung des ersten Lichtstrahls ist und die zweite prismatische Richtung eine in einem Winkel relativ zu der Ausbreitungsrichtung des ersten Lichtstrahls gedrehte Richtung ist.

3. Hintergrundbeleuchtungsvorrichtung nach Anspruch 2, wobei das prismatische Muster so eingerichtet ist, dass es den ersten Lichtstrahl von außen aus dem Substrat auskoppelt, wenn der erste Lichtstrahl mit einer der Prismenreihen kollidiert.

4. Hintergrundbeleuchtungsvorrichtung nach Anspruch 2 oder 3, wobei jede der Vielzahl von Prismenreihen eine Vielzahl von nebeneinanderliegenden Prismen (211) auf der ersten Fläche des Substrats umfasst, sodass jede der Vielzahl von Prismenreihen entweder eine lineare Form oder eine Zickzackform aufweist.

5. Hintergrundbeleuchtungsvorrichtung nach einem der vorhergehenden Ansprüche, wobei das lineare Muster umfasst:
eine lineare Anordnung von Rillen oder Vorsprüngen auf der zweiten Fläche des Substrats, und wobei wahlweise:
die Rillen oder die Vorsprünge entweder regelmäßig auf der zweiten Fläche des Substrats oder unregelmäßig auf der zweiten Fläche des Substrats angeordnet sind, oder
die Rillen oder die Vorsprüngen entweder in einer ersten linearen Richtung oder in einer zweiten linearen Richtung angeordnet sind, wobei die erste lineare Richtung senkrecht zu einer Ausbreitungsrichtung des zweiten Lichtstrahls ist und die zweite lineare Richtung eine in einem Winkel relativ zu der Ausbreitungsrichtung des zweiten Lichtstrahls gedrehte Richtung ist.

6. Hintergrundbeleuchtungsvorrichtung nach Anspruch 5, wobei das lineare Muster so eingerichtet ist, dass es den zweiten Lichtstrahl von außen aus dem Substrat herauskoppelt, wenn der zweite Lichtstrahl mit einem der Rillen oder Vorsprünge kollidiert.

7. Hintergrundbeleuchtungsvorrichtung nach einem der vorhergehenden Ansprüche, wobei die Lichtleiterplatte so eingerichtet ist, dass sie im 3D-Anzeigemodus und im 2D-Anzeigemodus betrieben wird, sodass der erste Lichtstrahl entweder auf eine Vorderseite oder eine Rückseite des Substrats auftrifft, sobald das Substrat im 3D-Anzeigemodus betrieben wird, und so, dass der zweite Lichtstrahl auf mindestens eine der Seitenflächen des Substrats auftrifft, sobald das Substrat im 2D-Anzeigemodus betrieben wird, und
wobei der erste Lichtstrahl und der zweite Lichtstrahl unterschiedliche Winkelverteilungen aufweisen.

8. Hintergrundbeleuchtungsvorrichtung nach einem der vorhergehenden Ansprüche, wobei das Substrat (110), das prismatische Muster (111) und das lineare Muster (112) eine Einzel struktur sind.

9. Hintergrundbeleuchtungsvorrichtung nach Anspruch 8, wobei
die erste Beleuchtungsvorrichtung (120) so eingerichtet ist, dass sie den ersten Lichtstrahl in Richtung einer dritten Fläche oder einer vierten Fläche der Lichtleiterplatte emittiert,
die zweite Beleuchtungsvorrichtung (130) so eingerichtet ist, dass sie den zweiten Lichtstrahl in Richtung mindestens einer der ersten Fläche und der zweiten Fläche der Lichtleiterplatte emittiert, und
der erste Lichtstrahl und der zweite Lichtstrahl unterschiedliche Winkelverteilungen aufweisen.

10. Hintergrundbeleuchtungsvorrichtung nach Anspruch 8 oder 9, wobei die Hintergrundbeleuchtungsvorrichtung so eingerichtet ist, dass sie,
die erste Beleuchtungsvorrichtung aktiviert und die zweite Beleuchtungsvorrichtung deaktiviert, wenn die Hintergrundbeleuchtungsvorrichtung im 3D-Anzeigemodus betrieben wird, und
die zweite Beleuchtungseinrichtung aktiviert und die erste Beleuchtungseinrichtung deaktiviert, wenn die Hintergrundbeleuchtung im 2D-Anzeigemodus betrieben wird.

11. Hintergrundbeleuchtungsvorrichtung nach Anspruch 8, 9 oder 10, wobei die erste Beleuchtungsvorrichtung umfasst:
eine erste Lichtquelle (121), die so eingerichtet ist, dass sie ein erstes Licht emittiert, wenn die Hintergrundbeleuchtungsvorrichtung im 3D-Anzeigemodus betrieben wird, und
eine erste Lichtumwandlungsvorrichtung (122), die so eingerichtet ist, dass sie den ersten Lichtstrahl auf der Grundlage des ersten Lichts erzeugt und den ersten auf die Lichtleiterplatte auftreffenden Lichtstrah lenkt, und wobei wahlweise die erste Lichtumwandlungsvorrichtung so eingerichtet ist, dass sie mindestens eine von Winkeltransformation, Homogenisierung und Kollimation des ersten Lichts durchführt, und wobei ferner wahlweise die erste Lichtumwandlungsvorrichtung eine Kollimationsanordnung (123), eine Homogenisierungsschicht (124) und einen Umlenkwürfel (125) umfasst, wobei
die Kollimationsanordnung getrennte oder vereinigte Kollimatoren enthält,
die homogenisierende Schicht mindestens eine(n) von einer Schicht mit mikrozylindrischem Muster, einer Schicht mit mikrosphärischem Muster und einem lichtformenden Diffusor enthält, und
der Umlenkwürfel einen Würfel mit entweder einer symmetrisch prismatischen Struktur oder einer asymmetrisch prismatischen Struktur umfasst.

12. Hintergrundbeleuchtungsvorrichtung nach einem der Ansprüche 8 bis 11, wobei die zweite Beleuchtungsvorrichtung umfasst:
eine zweite Lichtquelle (131), die so eingerichtet ist, dass sie ein zweites Licht emittiert, wenn die Hintergrundbeleuchtungsvorrichtung im 2D-Anzeigemodus betrieben wird, und
eine zweite Lichtumwandlungsvorrichtung, die so eingerichtet ist, dass sie den zweiten Lichtstrahl durch Einstellen des zweiten Lichts erzeugt und den zweiten Lichtstrahl so lenkt, dass er auf die Lichtleiterplatte auftrifft, und wobei wahlweise die zweite Lichtumwandlungsvorrichtung so eingerichtet ist, dass sie mindestens eines von Winkeltransformation, Homogenisierung oder Kollimation des zweiten Lichts durchführt.

13. Hintergrundbeleuchtungsvorrichtung nach einem der Ansprüche 8 bis 12, wobei die reflektierende Schicht (150) so eingerichtet ist, dass sie den aus der Lichtleiterplatte ausgekoppelten zweiten Lichtstrahl reflektiert und eine Winkelverteilung des zweiten Lichtstrahls ändert, wenn die Hintergrundbeleuchtungsvorrichtung im 2D-Anzeigemodus betrieben wird,
wobei die reflektierende Schicht mindestens eine von mikrosphärischer Schicht mit konvexem Linsenmuster oder mikrosphärischer Schicht mit konkavem Linsenmuster, einer Schicht mit mikropyramidalem Linsenmuster und einem reflektierenden Diffusor mit Lambertscher Winkelverteilung umfasst.

14. Anzeigevorrichtung (1000), umfassend:
die Hintergrundbeleuchtungsvorrichtung nach einem der vorhergehenden Ansprüche, und
eine Steuerung (1030), die so eingerichtet ist, dass sie die Hintergrundbeleuchtungsvorrichtung (100, 1020) anweist, den Anzeigemodus als einen von dem dreidimensionalen, 3D-, Anzeigemodus, und dem zweidimensionalen, 2D-, Anzeigemodus, einzustellen, und vorzugsweise wobei die Steuerung so eingerichtet ist, dass sie:
die erste Beleuchtungsvorrichtung anweist, den ersten Lichtstrahl in Richtung der Lichtleiterplatte zu emittieren, wenn der Anzeigemodus der 3D-Anzeigemodus ist, und
die zweite Beleuchtungseinrichtung anweist, den zweiten Lichtstrahl in Richtung der Lichtleiterplatte zu emittieren, wenn der Anzeigemodus der 2D-Anzeigemodus ist.

## Revendications

1. Dispositif de rétroéclairage (100) pouvant fonctionner sélectivement dans un mode d'affichage bidimensionnel, 2D, ou dans un mode d'affichage tridimensionnel, 3D, comprenant :
un substrat (110) conçu pour propager au moins l'un d'un premier faisceau lumineux et d'un second faisceau lumineux sur la base d'un effet de réflexion interne totale ;
un premier dispositif d'éclairage (120) conçu pour émettre le premier faisceau lumineux dans ledit mode d'affichage 3D ;
un second dispositif d'éclairage (130) conçu pour émettre le second faisceau lumineux dans ledit mode d'affichage 2D ;
un motif prismatique (111) conçu pour coupler le premier faisceau lumineux hors du substrat ;
un film de redirection de lumière (140) disposé au-dessus de la première face du substrat ;
un film réfléchissant (150) disposé sous une deuxième face du substrat ;
un motif linéaire (112) conçu pour coupler le second faisceau lumineux hors du substrat
**caractérisé en ce que**
ledit motif prismatique (111) est disposé sur une première face dudit substrat ; ledit motif linéaire (112) est disposé sur une deuxième face dudit substrat ;
ledit substrat (110), ledit motif prismatique (111) et ledit motif linéaire (112) sont compris dans une plaque de guidage de lumière ;
ledit premier dispositif d'éclairage (120) est conçu pour émettre ledit premier faisceau lumineux vers ladite plaque de guidage de lumière ; et **en ce que**
ledit second dispositif d'éclairage (130) est conçu pour émettre ledit second faisceau lumineux vers ladite plaque de guidage de lumière.

2. Dispositif de rétroéclairage selon la revendication 1, ledit motif prismatique comprenant : une pluralité de rangées de prismes (210) espacées sur la première face du substrat, et de préférence ladite pluralité de rangées de prismes étant agencées dans l'une d'une première direction prismatique et d'une seconde direction prismatique, la première direction prismatique étant une direction parallèle à une direction de propagation du premier faisceau lumineux, et la seconde direction prismatique étant une direction tournée d'un angle par rapport à la direction de propagation du premier faisceau lumineux.

3. Dispositif de rétroéclairage selon la revendication 2, ledit motif prismatique étant conçu pour coupler extérieurement le premier faisceau lumineux hors du substrat lorsque le premier faisceau lumineux entre en collision avec l'une des rangées de prismes.

4. Dispositif de rétroéclairage selon la revendication 2 ou 3, chacune de la pluralité de rangées de prismes comprenant une pluralité de prismes (211) sur la première face du substrat adjacents les uns aux autres de sorte que chacune de la pluralité de rangées de prismes présente l'une d'une forme linéaire et d'une forme en zigzag.

5. Dispositif de rétroéclairage selon une quelconque revendication précédente, ledit motif linéaire comprenant :
un réseau linéaire de l'une des rainures et des saillies sur la deuxième face du substrat, et éventuellement :
l'une des rainures et des saillies étant l'une parmi agencée régulièrement sur la deuxième face du substrat et agencée irrégulièrement sur la deuxième face du substrat ; ou
l'une des rainures et des saillies étant agencée dans l'une d'une première direction linéaire et d'une seconde direction linéaire, la première direction linéaire étant perpendiculaire à une direction de propagation du second faisceau lumineux, et la seconde direction linéaire étant une direction tournée d'un angle par rapport à la direction de propagation du second faisceau lumineux.

6. Dispositif de rétroéclairage selon la revendication 5, ledit motif linéaire étant conçu pour coupler extérieurement le second faisceau lumineux hors du substrat lorsque le second faisceau lumineux entre en collision avec l'une des rainures ou des saillies.

7. Dispositif de rétroéclairage selon une quelconque revendication précédente, ladite plaque de guidage de lumière étant conçue pour fonctionner dans le mode d'affichage 3D et le mode d'affichage 2D de sorte que le premier faisceau lumineux soit incident sur l'une d'une face avant et d'une face arrière du substrat, lorsque le substrat fonctionne dans le mode d'affichage 3D, et de sorte que le
second faisceau lumineux soit incident sur au moins l'une des faces latérales du substrat, lorsque le substrat fonctionne dans le mode d'affichage 2D, et
ledit premier faisceau lumineux et ledit second faisceau lumineux présentant des distributions angulaires différentes.

8. Dispositif de rétroéclairage selon une quelconque revendication précédente, ledit substrat (110), ledit motif prismatique (111) et ledit motif linéaire (112) possédant une structure unique.

9. Dispositif de rétroéclairage selon la revendication 8, ledit premier dispositif d'éclairage (120) étant conçu pour émettre le premier faisceau lumineux vers l'une d'une troisième face et d'une quatrième face de la plaque de guidage de lumière,
ledit second dispositif d'éclairage (130) étant conçu pour émettre le second faisceau lumineux vers au moins l'une de la première face et de la deuxième face de la plaque de guidage de lumière, et ledit premier faisceau lumineux et ledit second faisceau lumineux présentant des distributions angulaires différentes.

10. Dispositif de rétroéclairage selon la revendication 8 ou 9,
ledit dispositif de rétroéclairage
étant conçu pour,
activer le premier dispositif d'éclairage et désactiver le second dispositif d'éclairage, si le dispositif de rétroéclairage fonctionne dans le mode d'affichage 3D, et
activer le second dispositif d'éclairage et désactiver le premier dispositif d'éclairage, si le dispositif de rétroéclairage fonctionne dans le mode d'affichage 2D.

11. Dispositif de rétroéclairage selon la revendication 8, 9 ou 10, ledit premier dispositif d'éclairage
comprenant :
une première source lumineuse (121) conçue pour émettre une première lumière, si le dispositif de rétroéclairage fonctionne dans le mode d'affichage 3D ; et
un premier dispositif de transformation de lumière (122) conçu pour générer le premier faisceau lumineux sur la base de la première lumière, et diriger le premier faisceau lumineux incident sur la plaque de guidage de lumière, et éventuellement ledit premier dispositif de transformation de lumière étant conçu pour réaliser au moins l'une d'une transformation angulaire, d'une homogénéisation et d'une collimation sur la première lumière, et en outre éventuellement ledit premier dispositif de transformation de lumière comprenant un réseau de collimation (123), un film d'homogénéisation (124) et un cube de redirection (125),
ledit réseau de collimation comprenant des collimateurs séparés ou réunis,
ledit film d'homogénéisation comprenant au moins l'un d'un film à motif microcylindrique, d'un film à motif microsphérique et d'un diffuseur de mise en forme de lumière, et
ledit cube de redirection comprenant un cube possédant l'une d'une structure symétriquement prismatique et d'une structure asymétriquement prismatique.

12. Dispositif de rétroéclairage selon l'une quelconque des revendications 8 à 11, ledit second dispositif d'éclairage comprenant :
une seconde source lumineuse (131) conçue pour émettre une seconde lumière, si le dispositif de rétroéclairage fonctionne dans le mode d'affichage 2D ; et
un second dispositif de transformation de lumière conçu pour générer le second faisceau lumineux en réglant la seconde lumière, et pour diriger le second faisceau lumineux pour qu'il soit incident sur la plaque de guidage de lumière, et éventuellement ledit second dispositif de transformation de lumière étant conçu pour réaliser au moins l'une d'une transformation angulaire, d'une homogénéisation et d'une collimation sur la seconde lumière.

13. Dispositif de rétroéclairage selon l'une quelconque des revendications 8 à 12, ledit film réfléchissant (150) étant conçu pour réfléchir le second faisceau lumineux couplé hors de la plaque de guidage de lumière et pour modifier une distribution angulaire du second faisceau lumineux, si le dispositif de rétroéclairage fonctionne dans le mode d'affichage 2D,
ledit film réfléchissant comprenant au moins l'un d'un film à motif de lentille convexe microsphérique ou d'un film à motif de lentille concave microsphérique, d'un film à motif de lentille micropyramidale et d'un diffuseur réfléchissant présentant une distribution angulaire lambertienne.

14. Dispositif d'affichage (1000), comprenant :
le dispositif de rétroéclairage selon l'une quelconque des revendications précédentes ; et un dispositif de commande (1030) conçu pour ordonner au dispositif de rétroéclairage (100, 1020) de régler le mode d'affichage en tant que l'un du mode d'affichage tridimensionnel, 3D, et du mode d'affichage bidimensionnel, 2D, et de préférence ledit dispositif de commande étant conçu pour :
ordonner au premier dispositif d'éclairage d'émettre le premier faisceau lumineux vers la plaque de guidage de lumière, si le mode d'affichage est le mode d'affichage 3D, et
ordonner au second dispositif d'éclairage d'émettre le second faisceau lumineux vers la plaque de guidage de lumière, si le mode d'affichage est le mode d'affichage 2D.
